# EUROPÄISCHE PATENTANMELDUNG

(11) **EP 4 741 318 A1**
(43) Veröffentlichungstag der Anmeldung: **13.05.2026**
(21) Anmeldenummer: 25207089.1
(22) Anmeldetag: 07.10.2025
(51) Int. Cl.: B65G 21/20, B65G 47/29

(54) **BEHÄLTERFÜHRUNGSVORRICHTUNG UND BEHÄLTERBEHANDLUNGSMASCHINE MIT EINER ENTSPRECHENDEN BEHÄLTERFÜHRUNGSVORRICHTUNG**

(30) Priorität: 06.11.2024 DE 102024132267
(71) Anmelder: KHS GmbH, 44143 Dortmund (DE)
(72) Erfinder: Stenner, Holger, 44143 Dortmund (DE); Stjepic, Anto, 44143 Dortmund (DE)

(57) **Zusammenfassung**

Die Erfindung betrifft eine Behälterführungsvorrichtung (100) mit einem Geländer (110) mit mindestens einem sich in Transportrichtung (RT) einer Behältertransportvorrichtung (200) erstreckenden Führungselement (111), wobei das Führungselement (111) mittels einer Verstelleinrichtung (120) entlang einer Verstellrichtung (RV) quer zur Transportrichtung (RT) verstellbar ist, wobei die Verstelleinrichtung (120) Folgendes aufweist: ein mit dem Führungselement (111) verbundenes oder verbindbares Verstellelement (121), ein angetriebenes, insbesondere linear entlang der Verstellrichtung (RV) verfahrbares Verfahrelement (122), mindestens ein Mitnehmerelement (123), das dazu ausgebildet ist, das Verstellelement (121) mit dem Verfahrelement (122) zum Übertragen einer Bewegung entlang der Verstellrichtung (RV) zu koppeln, wobei das Mitnehmerelement (123) beim Überschreiten einer maximalen Gegenkraft, die entgegen einer Bewegung des Verstellelements (121) in Verstellrichtung (RV) wirkt, dazu ausgebildet ist, eine Bewegung des Verfahrelements (122) von einer Bewegung des Verstellelements (121) in Verstellrichtung (RV) zu entkoppeln.

Ferner betrifft die Erfindung eine Behälterbehandlungsmaschine mit einer entsprechenden Behälterführungsvorrichtung (100).

## Beschreibung

### Technisches Gebiet

Die Erfindung betrifft eine Behälterführungsvorrichtung mit einem Geländer, mit mindestens einem sich in Transportrichtung einer Behältertransportvorrichtung erstreckenden Führungselement.

Ferner betrifft die Erfindung eine Behälterbehandlungsmaschine mit einer entsprechenden Behälterführungsvorrichtung.

### Stand der Technik

In Behälterbehandlungsanlagen, beispielsweise in Abfüllanlagen zum Abfüllen eines flüssigen Mediums in Behälter wie Flaschen, Dosen oder dergleichen, werden die Behälter typischerweise über lange Transportwege mittels einer Transporteinrichtung mit einer Behälterführungsvorrichtung transportiert.

Die einzelnen Behälter und/oder zu Gebinden zusammengefassten Behälter werden dabei mithilfe eines Geländers der Behälterführungsvorrichtung durch die Behälterbehandlungsanlage bzw. deren einzelne Behälterbehandlungsmaschinen geführt. In der Regel weist das Geländer dabei beidseitig an der Behältertransportvorrichtung vorgesehene Geländerelemente auf, deren Abstand in Abhängigkeit von der Breite der zwischen den Geländerelementen hindurchzuführenden Behälter oder Gebinden einstellbar ist.

Im Stand der Technik sind unterschiedliche Verstelleinrichtungen zum Verstellen der Geländerelemente bekannt. Beispielsweise ist aus der DE 10 2020 104 091 A1 eine Behälterführungsvorrichtung mit einem Geländer mit zwei im Abstand voneinander angeordneten sich in Transportrichtung einer Behältertransporteinrichtung erstreckenden Führungselementen zum Führen von Behältern oder Gebinden bekannt. Dabei ist mindestens ein Führungselement quer zur Transportrichtung gegenüber dem anderen Führungselement mittels einer Verstelleinrichtung verstellbar.

Die Verstelleinrichtung weist einen um eine Rotationsachse verdrehbaren Antriebskörper und ein mit dem mindestens einen Führungselement verbundenes Koppelungselement auf. Das Koppelungselement ist derart mit dem Antriebskörper verbunden, dass ein Verdrehen des Antriebskörpers eine Verstellung des Koppelungselements quer zur Transportrichtung bewirkt.

### Darstellung der Erfindung

Der Erfindung liegt die Aufgabe zugrunde, eine verbesserte Behälterführungsvorrichtung anzugeben, die Vorteile gegenüber dem eingangs genannten Stand der Technik bietet. Weiterhin ist es Aufgabe der vorliegenden Erfindung, eine vorteilhafte Behälterbehandlungsmaschine mit einer entsprechenden Behälterführungsvorrichtung anzugeben.

Diese Aufgaben werden durch die Gegenstände der unabhängigen Ansprüche gelöst. Weitere mögliche Ausgestaltungen der Erfindung sind insbesondere in den abhängigen Ansprüchen angegeben.

Die erfindungsgemäße Lösung besteht insbesondere darin, eine Behälterführungsvorrichtung mit einem Geländer mit mindestens einem sich in Transportrichtung einer Behältertransportvorrichtung erstreckenden Führungselement anzugeben. Dabei ist das Führungselement mittels einer Verstelleinrichtung entlang einer Verstellrichtung insbesondere quer zur Transportrichtung verstellbar. Die Verstelleinrichtung weist ein mit dem Führungselement verbundenes oder verbindbares Verstellelement auf. Weiterhin weist die Verstelleinrichtung ein angetriebenes, insbesondere linear entlang der Verstellrichtung verfahrbares Verfahrelement auf. Außerdem weist die Verstelleinrichtung ein Mitnehmerelement auf. Das Mitnehmerelement ist dazu ausgebildet, das Verstellelement mit dem Verfahrelement zum Übertragen einer Bewegung entlang der Verstellrichtung, insbesondere starr, zu koppeln.

Erfindungsgemäß ist das Mitnehmerelement beim Überschreiten einer maximalen Gegenkraft dazu ausgebildet, die Bewegung des Verfahrelements von der Bewegung des Verstellelements in Verstellrichtung, zumindest temporär, also vorübergehend, zu entkoppeln. Dabei wirkt die Gegenkraft entgegen einer Bewegung des Führungselements in Verstellrichtung. Die Gegenkraft wirkt also entgegen der Verstellrichtung.

Die Behälterführungsvorrichtung ist ganz allgemein eine Vorrichtung, die dazu ausgebildet ist, sich entlang einer Transportstrecke in Transportrichtung bewegende Behälter zu führen.

Der Begriff Behälter bezeichnet im Sinne der vorliegenden Erfindung einstückige oder aus mehreren fest miteinander verbundenen Teilen gebildete Körper. Bevorzugt weist jeder Behälter im Inneren einen Hohlraum auf und ist dazu ausgebildet, diesen Hohlraum von der Umgebung abzutrennen. Bei den Behältern kann es sich beispielsweise um Behälter zur Aufbewahrung von Lebensmitteln und/oder von flüssigen, viskosen oder pastösen Substanzen handeln. Besonders bevorzugt handelt es sich bei den Behältern um Getränkebehälter. Insbesondere handelt es sich bei den Getränkebehältern um Flaschen, Dosen oder Getränkekartons.

Die Führung der Behälterführungsvorrichtung dient hierbei zur Stabilität und Ausrichtung der Behälter während ihres Transports. Hierzu weist die Behälterführungsvorrichtung das Geländer auf. Das Geländer ist als strukturelle, insbesondere seitliche, Begrenzung der Transportstrecke ausgebildet und hält die Behälter, insbesondere mittels Kontakt, auf der Transportstrecke.

Das Geländer weist das mindestens eine Führungselement als das Bauteil auf, das insbesondere direkt mit den zu transportierenden Behältern in Kontakt kommt oder in deren Nähe angeordnet ist, um die Führung der Behälter zu gewährleisten. Das mindestens eine Führungselement erstreckt sich zumindest im Wesentlichen entlang der Transportrichtung der
Behältertransportvorrichtung, also in der Richtung, in die die Behälter bewegt werden.

Vorzugsweise weist das Geländer zwei im Abstand voneinander angeordnete gegenüberliegende Führungselemente zum Führen der Behälter oder Gebinde auf. Dabei ist dann zumindest ein Führungselement gegenüber dem anderen Führungselement, insbesondere mittels der Verstelleinrichtung, verstellbar. Werden einander gegenüberliegende Führungselemente verwendet, wird der Abstand zwischen den beiden Führungselementen auch als Geländerbreite oder Förderbreite bezeichnet. Die Förderbreite gibt die Breite der Transportstrecke an.

Bei der Behältertransportvorrichtung handelt es sich um eine Vorrichtung, die ganz allgemein dazu ausgebildet ist, Behälter entlang der Transportrichtung zu transportieren. Bei der Behältertransportvorrichtung kann es sich beispielsweise um ein Förderband handeln.

Bei der Verstelleinrichtung handelt es sich ganz allgemein um eine Einrichtung, die dazu ausgebildet ist, das Führungselement, insbesondere quer zur Transportrichtung, zu verstellen. Mit anderen Worten wird die Breite der Transportstrecke, auf der die Behälter transportiert werden, durch Verstellen des Führungselements verändert. Hierdurch kann das Führungselement an unterschiedliche Behältergrößen und Formen bzw. unterschiedliche Gebindegrößen angepasst werden.

Zur Anbindung des Führungselements weist die Verstelleinrichtung das Verstellelement auf. Dabei ist das Verstellelement insbesondere ein mechanisches Bauteil, an dem das Führungselement befestigt ist.

Das Verfahrelement ist angetrieben, also mittels eines Antriebs verfahrbar. Das Verfahrelement bewegt sich linear entlang der Verstellrichtung und ist dabei zum aktiven Verschieben des Verstellelements und damit des Führungselements ausgebildet. Hierdurch ist die Position des Verstellelements und damit die Position des Führungselements veränderbar.

Das Mitnehmerelement ist ganz allgemein ein Koppelelement, das dazu ausgebildet ist, das Verstellelement mit dem Verfahrelement zu koppeln, also derart zu verbinden, dass die Bewegung des Verfahrelements auf das Verstellelement übertragbar ist.

Da das Mitnehmerelement erfindungsgemäß dazu ausgebildet ist, beim Überschreiten einer bestimmten Gegenkraft die Bewegung zwischen Verfahrelement und Verstellelement zu entkoppeln, erhöht sich die Betriebssicherheit der Verstelleinrichtung. Trifft das Führungselement bei seiner Verstellung auf ein Hindernis, wie ein Körperteil oder einen Gegenstand, wird die Bewegung ab einer vorgebaren maximalen Gegenkraft gestoppt, um mögliche Verletzungen oder Schäden zu vermeiden. Somit kann eine Quetschgefahr beim Zusammen- oder Auseinanderfahren der Führungselemente verringert werden.

Im gekoppelten Zustand nimmt das Verfahrelement das Verstellelement in seiner Bewegung mit. Im entkoppelten Zustand kann das Verfahrelement in Verstellrichtung relativ zu dem Verstellelement weiter verfahren, ohne das Verstellelement mitzubewegen oder zumindest im gleichen Maße mitzubewegen. Im entkoppelten Zustand ist somit eine Bewegung des Verfahrelements relativ zum Verstellelement möglich.

Gemäß einer vorteilhaften Ausführungsform der Erfindung ist das Verfahrelement im entkoppelten Zustand entlang eines durch Kontakt mit dem Verstellelement begrenzten Betätigungswegs bewegbar. Dabei erfolgt der Kontakt beim Berühren von mindestens einer Kontaktfläche des Verfahrelements mit mindestens einer Kontaktfläche des Verstellelements.

Die Bewegung ist hierbei auf einen vorgegebenen Betätigungsweg beschränkt, der durch den Kontakt zwischen den Kontaktflächen des Verfahrelements und des Verstellelements begrenzend festgelegt wird. Sobald die Kontaktflächen miteinander in Berührung kommen, endet der Betätigungsweg und es wird verhindert, dass das Verfahrelement in die gleichbleibende Richtung weiterhin relativ zu dem Verstellelement bewegt werden kann.

Durch den definierten Betätigungsweg ist sichergestellt, dass es nur einen festgelegten Spielraum für die Bewegung des Verfahrelements relativ zum Verstellelement gibt. Hierdurch ist eine zuverlässige Steuerung umsetzbar.

Alternativ zur Begrenzung des Betätigungsweges mit einem Kontakt zwischen Verstelleinrichtung und Verfahrelement lässt sich der Betätigungsweg auch durch eine erfassbare Maximalposition des Verfahrelements relativ zu dem Verstellelement begrenzen. Dabei wird dann die Position des Verfahrelements relativ zu dem Verstellelement erfasst und beim Erreichen der Maximalposition eine entsprechende Gegenbewegung oder einen Stopp eingeleitet. Zu Erfassung der Position des Verfahrelements eignet sich beispielsweise eine Magnetsensoranordnung mit einem Permanentmagneten und einem Hallsensor.

Gemäß einer vorteilhaften Weiterbildung der vorherigen Ausführungsform ist der Betätigungsweg kleiner als 10 mm, vorzugsweise kleiner als 5 mm, besonders bevorzugt kleiner als 3 mm.

Wenn der Betätigungsweg, also der Weg, den das Verfahrelement im entkoppelten Zustand relativ zu dem Verstellelement zurücklegen kann, auf weniger als 10 mm bzw. 5 mm oder sogar weniger als 3 mm begrenzt ist, verfährt das Verfahrelement nur minimal, bevor es gestoppt wird. Insbesondere wenn die Ansteuerung der Verstelleinrichtung abhängig von einem Kontakt des Verfahrelements mit dem Verstellelement ausgebildet ist, lässt sich hiermit eine reaktionsschnelle Ansteuerung umsetzen. Das System hat somit eine kurze Reaktionszeit, wodurch größere Schäden oder Verletzungen verhindert werden können.

Gemäß einer vorteilhaften Weiterbildung der Erfindung weist die Verstelleinrichtung eine Kontaktsensoreinheit auf. Die Kontaktsensoreinheit ist insbesondere dazu ausgebildet, einen Kontakt zwischen dem Verstellelement und dem Verfahrelement zu erfassen.

Mit anderen Worten dient die Kontaktsensoreinheit als Sensoreinheit dazu, den Moment zu erfassen, in dem das Verfahrelement und das Verstellelement in Berührung kommen. Dies ermöglicht eine präzise Überwachung des Zustands der Kopplung oder Entkopplung der beiden Bauteile. Sobald ein Kontakt zwischen dem Verfahrelement und dem Verstellelement erkannt wird, kann die Kontaktsensoreinheit also feststellen, dass das Verfahrelement von dem Verstellelement gekoppelt ist und somit folglich ein Hindernis im Verfahrweg vorhanden ist.

Durch Verarbeiten der Messwerte der Kontaktsensoreinheit lassen sich somit geeignete Maßnahmen einleiten. Hierzu kann ein Messwert der Kontaktsensoreinheit als Steuersignal verwendet werden. So kann dann sofort ein Stopp oder eine Anpassung der Bewegung ausgelöst werden, um Verletzungen oder Schäden zu verhindern.

Die Kontaktsensoreinheit ist vorzugsweise dazu ausgebildet, den den Betätigungsweg begrenzenden Kontakt zwischen Verstelleinrichtung und Verfahrelement zu erfassen. Dann ist die Kontaktsensoreinheit im Grunde dazu ausgebildet, anzuzeigen, wann der Betätigungsweg von dem Verfahrelement zurückgelegt worden ist.

Vorzugsweise kann es sich bei der Kontaktsensoreinheit allgemein um einen Berührungssensor handeln, insbesondere um einen induktiven, resistiven, kapazitiven oder piezoelektrischen Berührungssensor.

Bei einer vorteilhaften Weiterbildung der Erfindung ist die Kontaktsensoreinheit an zumindest einer Endseite des Verfahrelements in Verstellrichtung gesehen angeordnet.

Vorzugsweise ist jeweils eine Kontaktsensoreinheit an einer der Endseiten des Verfahrelements in Verstellrichtung gesehen angeordnet. Wird an beiden Endseiten des Verfahrelements eine entsprechende Kontaktsensoreinheit positioniert, kann die Bewegung des Verfahrelements in zwei Richtungen, also zu beiden Seiten hin, erfasst werden und ein entsprechender Kontakt überwacht werden, sobald das Verfahrelement eine seiner Endpositionen oder den vorgesehenen Bewegungsbereich erreicht.

Somit wird ein Stopp oder eine Bewegungsumkehr durch die Verstelleinrichtung nicht nur in Verstellrichtung, sondern auch entgegen der Verstellrichtung bewirkt. Hierdurch kann das Verletzungsrisiko beim Auseinanderfahren der Führungselemente weiter reduziert werden.

Beispielsweise ist die Kontaktsensoreinheit zwischen oder an den Kontaktflächen des Verfahrelements oder des Verstellelements angeordnet. Weiterhin ist es denkbar, dass das Verfahrelement und/oder das Verstellelement bestromt ist und ein Kontakt zwischen dem Verfahrelement und dem Verstellelement durch eine entsprechende Messwertänderung des Stroms erfasst wird.

Gemäß einer vorteilhaften Weiterbildung der Erfindung ist die Behälterführungsvorrichtung mit einer Steuereinrichtung verbunden oder verbindbar. Die Steuereinrichtung ist dabei insbesondere dazu ausgebildet, die das Verfahrelement antreibende Antriebseinrichtung zu stoppen oder deren Ansteuerrichtung umzukehren, insbesondere wenn mittels der Kontaktsensoreinheit ein Kontakt erfasst wird.

Somit wird eine automatische und schnelle Anpassung der Bewegung des Führungselements möglich. Die Steuereinrichtung ist also dazu ausgebildet, basierend auf einem Messwert, beispielsweise "Kontakt erfolgt", der Kontaktsensoreinheit das Verfahrelement zu steuern. Die Steuereinrichtung und die Kontaktsensoreinheit sind entsprechend signaltechnisch miteinander verbunden.

Bei einer vorteilhaften Weiterbildung der Erfindung ist das Verfahrelement in dem Verstellelement angeordnet.

Mit anderen Worten ist das Verfahrelement derart in das Verstellelement integriert bzw. in diesem verbaut, dass es sich innerhalb des Verstellelements befindet. Dabei ist das Verfahrelement vorzugsweise derart in dem Verstellelement angeordnet, dass es entlang eines begrenzten Wegs geführt in Verstellrichtung bewegbar ist. Bei dem begrenzten Weg handelt es sich insbesondere um den Betätigungsweg.

Durch die kompakte Bauweise wird eine äußerst platzsparende Konstruktion aus Verfahrelement und Verstellelement erreicht. Auch ist das Verfahrelement bzw. die Kontaktsensoreinheit durch Anordnung innerhalb des Verstellelements vor äußeren Einflüssen geschützt, die die Funktionalität des Systems beeinflussen könnten. Hierdurch erhöht sich Langlebigkeit und Zuverlässigkeit der Verstelleinrichtung.

Gemäß einer vorteilhaften Weiterbildung der Erfindung sind am Verfahrelement oder am Verstellelement eine Vielzahl von Mitnehmerelementen ausgebildet.

Vorzugsweise sind die Mitnehmerelemente gleichmäßig verteilt ausgebildet. Weiterhin vorzugsweise sind mindestens zwei Mitnehmerelemente, besonders bevorzugt mindestens vier Mitnehmerelemente ausgebildet. Bei einer Vielzahl an Mitnehmerelementen ist an mehreren Positionen eine Kraftübertragung zwischen Verfahrelement und Verstellelement möglich. So lässt sich also eine gleichmäßige und zuverlässige Kraftübertragung gewährleisten, wobei die Kraft insbesondere gleichmäßig auf mehrere Punkte verteilt ist. Hierdurch reduziert sich das Risiko von Verschleiß oder Beschädigung an den einzelnen Stellen. Auch steigt die Zuverlässigkeit des Systems.

Gemäß einer vorteilhaften Weiterbildung der Erfindung ist das mindestens eine Mitnehmerelement als vorgespanntes Druckstück ausgebildet. Insbesondere sind die Mitnehmerelemente als Kugeldruckstücke ausgebildet. Vorzugsweise sind die Druckstücke in eine Richtung senkrecht zur Verstellrichtung vorgespannt.

Ganz allgemein weist ein vorgespanntes Druckstück, einen Druckkörper, typischerweise eine Kugel auf, die durch eine Feder oder einen ähnlichen Vorspannmechanismus in Richtung des Verfahrelements oder des Verstellelements gedrückt wird.

Der Druckkörper wird hierdurch in eine Ausnehmung in dem Verfahrelement oder dem Verstellelement gedrückt. Durch den Druckkörper ist somit eine Verbindung zwischen dem Verfahrelement und dem Verstellelement herstellbar, mittels derer sich eine Kraft oder Bewegung senkrecht zur Vorspannrichtung übertragen lässt. Bei einem Hindernis oder übermäßiger Belastung rutscht der Druckkörper aus der Ausnehmung heraus und entkoppelt somit das Verstellelement von dem Verfahrelement.

Bei einer vorteilhaften Weiterbildung der Erfindung ist das vorgespannte Druckstück dazu ausgebildet, im gekoppelten Zustand des Verfahrelements einen Rasteingriff zwischen Verfahrelement und Verstellelement zu bewirken. Im entkoppelten Zustand ist der Rasteingriff zwischen Verfahrelement und Verstellelement aufgelöst.

Wenn das Verstellelement und das Verfahrelement durch den Rasteingriff miteinander verbunden sind, ist eine Übertragung der Bewegung zwischen dem Verfahrelement und dem Verstellelement möglich. Im entkoppelten Zustand ist der Rasteingriff gelöst, wodurch das Verfahrelement relativ zum Verstellelement bewegbar ist. Insgesamt ist also ein automatisches Entkoppeln bei Überlastung ausgebildet.

Sobald eine zu hohe Gegenkraft auftritt, wird der Rasteingriff gelöst und das Verstellelement nicht mehr weiter bewegt.

Bei einer alternativen Ausführungsform der Erfindung ist das mindestens eine Mitnehmerelement als elastisches Element, insbesondere als O-Ring, ausgebildet. Dabei ist das elastische Element in Verstellrichtung komprimierbar.

Hierdurch kann sich das elastische Element verformen und so eine lineare Bewegung des Verstellelements gemeinsam mit dem Verfahrelement entkoppeln bzw. abdämpfen. Das bedeutet, dass sich das Verfahrelement unter Verformung des elastischen Elements weiter bewegen kann, selbst wenn das Verstellelement auf ein Hindernis auftritt. Wenn kein Hindernis im Weg ist, das Verfahrelement und das Verstellelement also gekoppelt sind, erfolgt eine Übertragung der Bewegung von dem Verfahrelement über das elastische Element auf das Verstellelement.

Erst bei einer zu großen Gegenkraft absorbiert das elastische Element die Kraft des Verfahrelements zumindest teilweise.

Bei einer vorteilhaften Weiterbildung der Erfindung ist das elastische Element axial zwischen einer Schulter des Verstellelements und einer Schulter des Verfahrelements angeordnet.

So lässt sich das elastische Element zur Kraftübertragung zwischen dem Verstellelement und dem Verfahrelement anordnen, ohne dass ein Anordnen des elastischen Elements an einer Endseite des Verfahrelements nötig wäre. Dennoch wäre selbstverständlich auch eine Anordnung des elastischen Elements an der Endseite des Verfahrelements denkbar.

Die Schultern fungieren als Begrenzungen, die den Platz für das elastische Element definieren, sodass eine Kraftübertragung von dem Verfahrelement über das elastische Element auf das Verstellelement möglich ist.

Besonders bevorzugt weist die Behälterführungsvorrichtung zwei elastische Elemente, insbesondere zwei O-Ringe auf. So lässt sich insbesondere mit zwei Schultern am Verstellelement oder zwei Schultern am Verfahrelement eine Übertragung einer Bewegung des Verfahrelements auf das Verstellelement in Richtung der Verstellrichtung und in Richtung entgegen der Verstellrichtung umsetzen. Dabei erfolgt also in beiden Richtungen eine Kraftübertragung von dem Verfahrelement über das elastische Element auf das Verstellelement.

Ganz allgemein kann es sich bei den Schultern um in radialer Richtung vorspringende oder in radiale Richtung zurückgesetzte Bereiche handeln. Entscheidend ist nur, dass diese die Möglichkeit bieten, ein elastisches Element zwischen einem Teil des Verfahrelements und einem Teil des Verstellelements anordnen zu können.

Auch wenn die Schulter vorzugsweise umfänglich angeordnet ist, ist dies nicht zwingend notwendig. Auch eine nicht umfänglich angeordnete Schulter und/oder ein nicht umfänglich angeordnetes elastisches Element sind grundsätzlich funktionsfähig.

Bei einer vorteilhaften Weiterbildung der Erfindung weist die Verstelleinrichtung eine verstellbare Verriegelungseinheit auf. Die verstellbare Verriegelungseinheit ist insbesondere dazu ausgebildet, eine Relativbewegung zwischen dem Verstellelement und dem Verfahrelement in Verstellrichtung zu sperren und freizugeben.

Die Verstelleinrichtung ist also dazu ausgebildet, die Bewegung des Verstellelements relativ zum Verfahrelement entweder zu sperren, sodass eine Kopplung zwischen dem Verfahrelement und dem Verstellelement hergestellt ist, oder sie gibt die Bewegung frei, sodass das Verstellelement relativ zu dem Verfahrelement bewegbar ist.

Beispielsweise ist es denkbar, dass die Verstelleinrichtung die Bewegung frei gibt, wenn eine Verstellung mittels der Verstelleinrichtung durchgeführt wird und sperrt, wenn ein normaler Betrieb der Behälterführungsvorrichtung erfolgt und keine Verstellung mittels der Verstelleinrichtung durchgeführt wird. Einerseits kann hierdurch verhindert werden, dass im normalen Betrieb die Verstelleinrichtung ausgelöst wird. Andererseits ist es denkbar, dass der Betätigungsweg so groß ist, dass im freigegebenen Zustand eine nicht tolerierbare Bewegung des Verstellelements und somit des Geländers vorliegen würde. Entsprechend muss dann die Bewegungsmöglichkeit des Verstellelements eingeschränkt werden.

Die erfindungsgemäße Lösung besteht weiter darin, eine

Behälterbehandlungsmaschine anzugeben. Die Behälterbehandlungsmaschine ist zum Behandeln von Behältern ausgebildet und weist mindestens eine der vorab beschriebenen Behälterführungsvorrichtungen auf.

Dabei erfolgt insbesondere beim Formatwechsel auf andere Behältergrößen oder andere Gebinde eine Verstellung der Führungselemente mittels der Verstelleinrichtung. Wenn ein Formatwechsel auf andere Behältergrößen oder Gebinde erforderlich ist, folgt also eine Anpassung der Geländer. Durch die Behälterführungsvorrichtung ist die Behälterbehandlungsmaschine zum Behandeln verschiedener Behältergrößen, -formen und Gebinden verwendbar.

Da die Behälterbehandlungsmaschine mindestens eine der vorab beschriebenen Behälterführungsvorrichtungen aufweist, können sämtliche einzelne Aspekte und Vorteile der Behälterführungsvorrichtungen auf die Behälterbehandlungsmaschine übertragen werden.

Bei der Behälterbehandlungsmaschine handelt es sich ganz allgemein um eine Maschine zum Behandeln von Behältern. Beispielsweise kann es sich bei der Behälterbehandlungsmaschine um eine Maschine zum Herstellen, Befüllen, Etikettieren und/oder Zusammenstellen und Verpacken von Behältern in Gruppen handeln.

Die Behälterbehandlungsmaschine kann Teil einer Behälterbehandlungsanlage mit einer Vielzahl von Behälterbehandlungsmaschinen sein. Die Behälterbehandlungsanlage weist dann beispielsweise eine Behälterherstellungsmaschine, eine Behälterbefüllungsmaschine, eine Behälterschließmaschine, eine Behälteretikettiermaschine und/oder eine Behälterverpackungsmaschine auf.

Die einzelnen Behälterbehandlungsmaschinen sind dann vorzugsweise mittels Behältertransportvorrichtungen verbunden. Zur Führung der Behälter auf der Behältertransportvorrichtung dienen dann die vorab beschriebenen Behälterführungsvorrichtungen.

Die Behälterführungsvorrichtungen können auch innerhalb der einzelnen Behälterbehandlungsmaschinen verwendet werden.

Durch die Behälterführungsvorrichtung sind eine zuverlässige Funktion und eine Flexibilität beim Formatwechsel möglich. Insgesamt können Stillstandzeiten der Behälterbehandlungsanlage und Behälterbehandlungsmaschinen reduziert werden.

Auch ist durch die verhinderte Quetschgefahr die Arbeit innerhalb der Behälterbehandlungsmaschine selbst beim Formatwechsel möglich. Hierdurch müssen weniger Sicherheitsmaßnahmen umgesetzt werden.

### Kurze Beschreibung der Zeichnungen

Die oben beschriebenen, unterschiedlichen und beispielhaften Merkmale können erfindungsgemäß miteinander kombiniert werden, soweit dies technisch sinnvoll ist. Weitere Merkmale, Vorteile und Ausführungsformen der Erfindung ergeben sich aus der nachfolgenden Beschreibung von Ausführungsbeispielen und anhand der Figuren.

Die zur Erläuterung der Ausführungsbeispiele verwendeten Figuren zeigen:
- Fig. 1: eine perspektivische Ansicht einer Transportstrecke mit einer erfindungsgemäßen Behälterführungsvorrichtung;
- Fig. 2: eine Schnittansicht durch die Verstelleinrichtungen einer Behälterführungsvorrichtung, wie sie in Figur 1 verwendet werden kann;
- Fig. 3: eine vergrößerte Schnittansicht einer Behälterführungsvorrichtung gemäß einer ersten Ausführungsform der Erfindung;
- Fig. 4: eine vergrößerte Schnittansicht einer Behälterführungsvorrichtung gemäß einer zweiten Ausführungsform der Erfindung; und
- Fig. 5: eine vergrößerte Schnittansicht einer Behälterführungsvorrichtung gemäß einer dritten Ausführungsform der Erfindung.

### Wege zur Ausführung der Erfindung

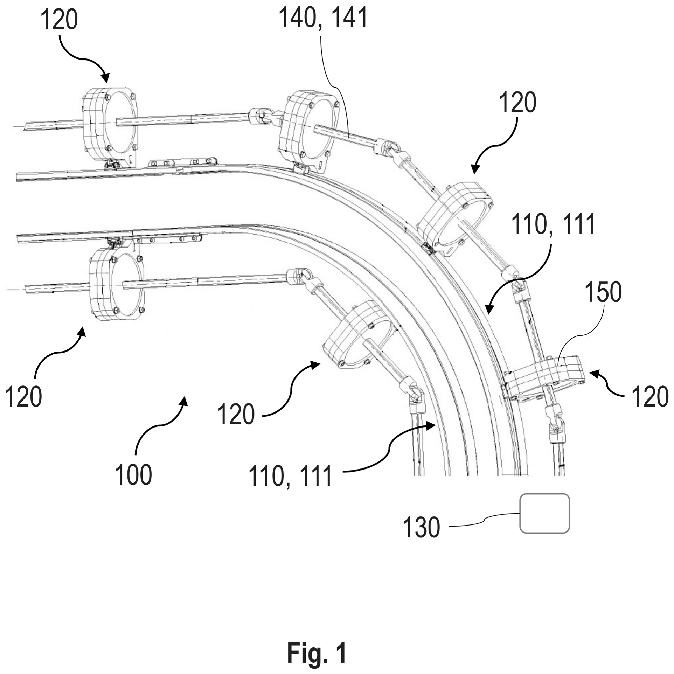

Fig. 1 zeigt einen bogenförmigen Bereich eines Streckenabschnitts einer Transportstrecke für Behälter mit einer Behälterführungsvorrichtung 100.

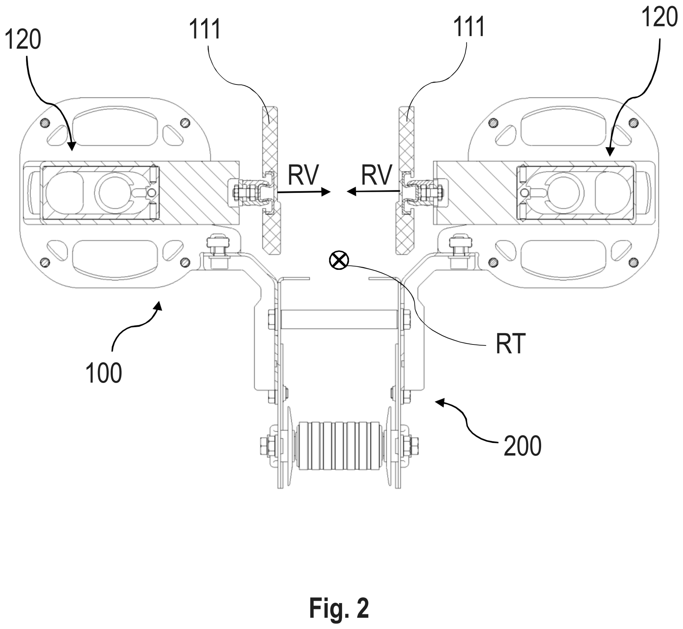

Die Behälterführungsvorrichtung 100 ist zur Anordnung an einer in Fig. 2 dargestellten Behältertransportvorrichtung 200 geeignet, die beispielsweise als Transportband ausgebildet Behälter wie Flaschen oder Dosen, sowie Gebinde von Behältern durch eine hier ebenfalls nicht dargestellte Behälterbehandlungsanlage bzw. Behälterbehandlungsmaschine transportiert. Die Behälterführungsvorrichtung 100 weist in Abstand voneinander angeordnete hier exemplarisch bogenförmig ausgebildete Führungselemente 111 auf.

Die Führungselemente 111 sind als Teil eines bogenförmigen Geländers 110 ausgebildet. In dem in Fig. 1 gezeigten Ausführungsbeispiel hängt die Geländerbreite vom Abstand der einander gegenüberliegenden Führungselemente 111 ab. Zur Einstellung des Abstands der Führungselemente 111 weist die Behälterführungsvorrichtung 100 mehrere Verstelleinrichtungen 120 auf.

Die Verstelleinrichtungen 120 sind benachbart zueinander entlang der Transportrichtung angeordnet. Durch die Verstelleinrichtungen 120 sind die einander gegenüberliegenden Führungselemente 111 quer zur Transportrichtung verlagerbar. In Fig. 1 sind von den Verstelleinrichtungen 120 insbesondere nur die Gehäuse 150 zu erkennen.

Die Verstelleinrichtungen 120 sind mittels einer Antriebseinrichtung 140 zum Verstellen der Führungselemente 111 antreibbar. Dabei sind von der Antriebseinrichtung 140 insbesondere die Antriebswellen 141 dargestellt, wobei in Fig. 1 mehrere Antriebswellen 141 gelenkig verbunden sind. Die Antriebseinrichtung 140 ist mittels einer schematisch dargestellten Steuereinrichtung 130 zum Verstellen der Führungselemente 111 ansteuerbar.

Fig. 2 zeigt eine Schnittansicht einer an einer Behältertransportvorrichtung 200 angebrachten Behälterführungsvorrichtung 100. Dabei kann es sich bei der Behälterführungsvorrichtung 100 grundsätzlich um die in Fig. 1 gezeigte Behälterführungsvorrichtung 100 handeln.

Die Behältertransportvorrichtung 200 ist dazu ausgebildet, Behälter in der dargestellten Transportrichtung RT zu bewegen.

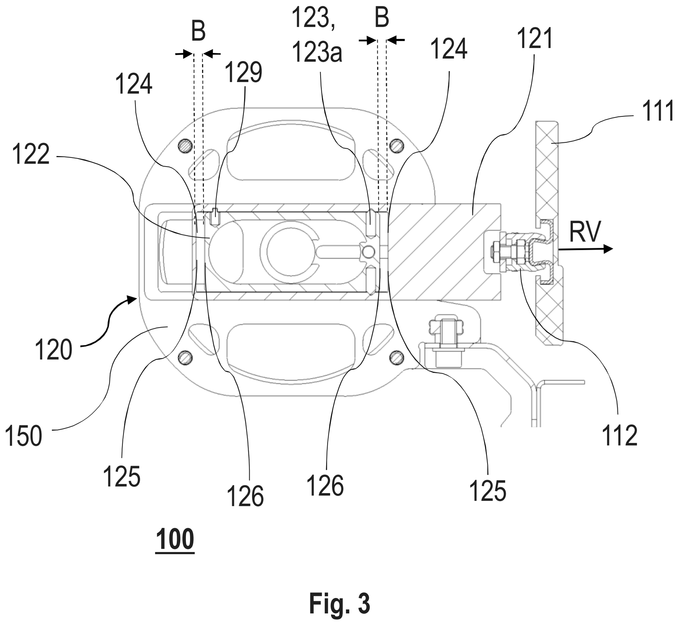

Durch Verstellung der Führungselemente 111 in die ebenfalls dargestellte Verstellrichtung RV kann die Geländerbreite der Behälterführungsvorrichtung 100 verstellt werden. Hierzu weist die Behälterführungsvorrichtung 100 die Verstelleinrichtung 120 auf, die mit Bezugnahme auf die Figs 3 bis 5 in exemplarischen Ausführungsformen näher beschrieben wird.

In Fig. 3 ist eine vergrößerte Schnittansicht eines Teils der Behälterführungsvorrichtung 100 gezeigt.

Hier ist insbesondere die Verstelleinrichtung 120 deutlich dargestellt. Die Verstelleinrichtung 120 ist in dem Gehäuse 150 untergebracht.

Die Verstelleinrichtung 120 weist ein Verfahrelement 122 auf. Das Verfahrelement 122 ist beispielsweise mittels der in Fig. 1 gezeigten Antriebseinrichtung 140 antreibbar. Durch das Antreiben ist das Verfahrelement 122 linear entlang der Verstellrichtung RV verfahrbar. Das Verfahrelement 122 ist mittels Mitnehmerelemente 123 mit einem Verstellelement 121 gekoppelt. Das Führungselement 111 ist mit einem Befestigungselement 112 an dem Verstellelement 121 befestigt. Über die Mitnehmerelemente 123 ist somit das Übertragen einer Bewegung von dem Verfahrelement 122 auf das Verstellelement 121 und somit auf das Führungselement 111 möglich.

Bei den in Fig. 3 gezeigten Mitnehmerelementen 123 handelt es sich um vorgespannte Druckstücke 123a, insbesondere Kugeldruckstücke. Dabei sind die vorgespannten Druckstücke 123a in der in Fig. 3 gezeigten Ausführungsform in dem Verfahrelement 122 angeordnet.

Die Druckstücke 123a sind so ausgebildet, dass diese nach außen in Richtung des Verstellelements 121 vorgespannt sind. Dabei wird ein Druckkörper, beispielsweise eine Kugel, in eine Ausnehmung in dem Verstellelement 121 gedrückt. Das Verfahrelement 122 ist hierdurch mit dem Verstellelement 121 verrastbar und nimmt das Verstellelement 121 in seiner Bewegung mit.

Sobald eine zu große Gegenkraft bei einer Bewegung des Verstellelements 121 auftritt, rutscht der Druckkörper, insbesondere die Kugel, des vorgespannten Druckstücks 123a aus ihrer Ausnehmung in dem Verstellelement 121 heraus. Dann wird keine Bewegung mehr von dem Verfahrelement 122 auf das Verstellelement 121 übertragen. Das Mitnehmerelement 123 entkoppelt also die Bewegung des Verfahrelements 122 von dem Verstellelement 121. Hierdurch ist das Verfahrelement 122 relativ zu dem Verstellelement 121 in Verstellrichtung RV bewegbar.

Insbesondere ist das Verfahrelement 122 dann entlang des dargestellten Betätigungswegs B bewegbar. Der Betätigungsweg B ist durch einen Kontakt mit dem Verstellelement 121 begrenzt. Hierzu weist das Verfahrelement 122 auf der rechten und linken Seite jeweils eine Kontaktfläche 126 und das Verstellelement 121 entsprechende Kontaktflächen 125 auf.

Die Verstelleinrichtung 120 weist ferner eine Kontaktsensoreinheit 124 auf, die an dem Verfahrelement 122 oder dem Verstellelement 121, insbesondere deren Kontaktflächen 125, 126 angeordnet ist. Mittels der Kontaktsensoreinheit 124 ist es möglich, den Kontakt zwischen dem Verstellelement 121 und dem Verfahrelement 122, genauer deren Kontaktflächen 125, 126 zu erfassen. Durch die Erfassung des Kontakts als Steuersignal ist ein Gegensteuern der Verstelleinrichtung 120 bzw. der Antriebseinrichtung 140 möglich.

Trifft also das Führungselement 111 oder das Geländer 110 auf ein Hindernis, entkoppeln sich das Verfahrelement 122 und das Verstellelement 121. Beim weiteren Verfahren des Verfahrelements 122 relativ zu dem Verstellelement 121 wird durch Kontakt mit dem Verstellelement 121 die Kontaktsensoreinheit 124 ausgelöst, die daraufhin beispielsweise ein Stopp- oder Gegensteuern des Verfahrelements 122 einleiten kann.

Beim Gegensteuern fährt das Verfahrelement 122 den Betätigungsweg B wieder zurück. Dabei koppelt das Mitnehmerelement 123, das Verfahrelement 122 wieder mit dem Verstellelement 121. So nimmt das Verfahrelement 122 das Verstellelement 121 in eine Richtung entgegengesetzt der Verstellrichtung RV wieder mit. Hierdurch entfernt sich das Geländer 110 bzw. Führungselement 111 wieder von dem Hindernis.

Wird ein Kontakt mittels der Kontaktsensoreinheit 124 erfasst, kann beispielsweise mittels der in Fig. 1 gezeigten Steuereinrichtung 130 die Antriebseinrichtung 140 gestoppt oder deren Ansteuerrichtung umgekehrt werden. Dann verfährt das Verfahrelement 122 zurück und entfernt beim Eingriff mit dem Verstellelement 121 das Führungselement 111 von dem Hindernis. So können Körperteile oder blockierende Gegenstände geschützt werden. Das Verfahren in umgekehrter Ansteuerrichtung muss nur kurzzeitig erfolgen bis die Gefahr beseitigt ist.

Wie in Fig. 3 zu erkennen, ist diese Funktion nicht nur beim Einfahren des Führungselements 111, sondern auch beim Ausfahren des Führungselements 111 gegeben. So befindet sich auch auf der linken Seite ein entsprechender Betätigungsweg B sowie Kontaktflächen 125 und 126 und eine Kontaktsensoreinheit 124.

Die in Fig. 3 gezeigte Ausführungsform weist zudem eine Verriegelungseinheit 129 auf. Die Verriegelungseinheit 129 ist zwischen einer sperrenden und freigebenden Position verstellbar. In der sperrenden Position sperrt die Verriegelungseinheit 129 eine Bewegung des Verstellelements 121 in Verstellrichtung RV relativ zu dem Verfahrelements 122. In der freigebenden Position gibt die Verriegelungseinheit 129 eine Bewegung des Verstellelements 121 relativ zu dem Verfahrelement 122 entsprechend frei.

Mit der Verriegelungseinheit 129 ist somit die Funktion des Mitnehmerelements 123 überbrückbar. Dadurch lässt sich eine Bewegung des Verstellelements 121 im normalen Betrieb verhindern. In der Praxis kann die Verriegelungseinheit 129 dazu verwendet werden, eine Funktion des Mitnehmerelements 123 beim Verfahren zuzulassen und die Funktion des Mitnehmerelements 123 im normalen Betrieb, wenn die Behälterführungsvorrichtung 100 auf die korrekte Behältergröße bzw. Gebindegröße eingestellt ist, zu überbrücken. So wird einerseits verhindert, dass im normalen Betrieb bei einem hohen Druck der transportierten Behälter die Verstelleinrichtung 120 unbeabsichtigt aktiviert wird. Andererseits kann verhindert werden, dass sich das Verstellelement 121 im Betrieb entlang des Betätigungswegs B verstellt. Dies ist insbesondere dann relevant, wenn der Betätigungsweg B groß gewählt ist und das Verstellelement 121 Positionen einnehmen kann, die außerhalb eines Toleranzbereichs für die Position des Verstellelements 121 im Betrieb sind. Ohne Verriegelung der Verriegelungseinheit 129 kann es im Betrieb nämlich durch die Bewegung des Verstellelements 121 relativ zu dem Verfahrelement 122 zu einer Verstellung des Führungselements 111 kommen. Hierdurch ist es bei einem größeren Betätigungsweg B denkbar, dass das Führungselement 111 außerhalb einer tolerierbaren Position angeordnet ist. Dies würde dann also dazu führen, dass die Geländerbreite bzw. die Förderbreite für die Behälter bzw. die Gebinde außerhalb eines Toleranzbereichs liegt, also zu groß oder zu klein ist.

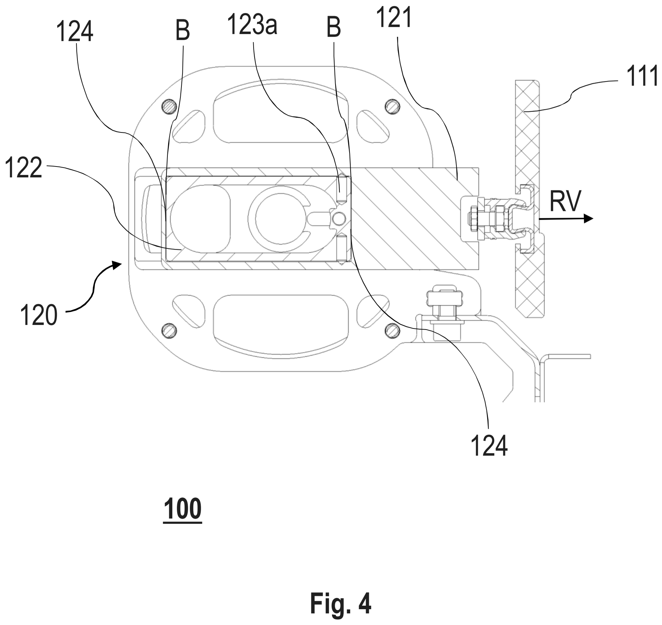

Fig. 4 zeigt eine zweite Ausführungsform der Behälterführungsvorrichtung 100. Die Behälterführungsvorrichtung 100 ist im Grunde ähnlich wie die in Fig. 3 gezeigte Behälterführungsvorrichtung 100 aufgebaut. Daher wird im Folgenden hauptsächlich auf die Unterschiede zwischen der in Fig. 3 und der in Fig. 4 gezeigten Behälterführungsvorrichtung 100 eingegangen.

Wie in Fig. 4 zu sehen, weist die Behälterführungsvorrichtung 100 ebenfalls die Verstelleinrichtung 120 mit Verstellelement 121, Verfahrelement 122 und Mitnehmerelementen 123 in Form von Druckstücken 123a auf. Auch ist das Verfahrelement 122 innerhalb des Verstellelements 121 angeordnet. Dabei sind jedoch die Betätigungswege B jeweils zwischen einer der Kontaktflächen 126 des Verfahrelements 122 und einer der Kontaktflächen 125 des Verstellelements 121 kürzer als in Fig. 3. Insbesondere ist der Betätigungsweg B derart kurz, dass dieser in Fig. 4 kaum erkennbar ist. Dennoch ist die Funktion mit den Kontaktflächen 125, 126 und der Kontaktsensoreinheit 124 dieselbe wie in Fig. 3. Im Unterschied zu Fig. 3 reagiert die Verstelleinrichtung 120 jedoch aufgrund des kürzeren Betätigungswegs B entsprechend schneller auf ein Hindernis am Führungselement 111 bzw. Geländer 110.

Durch den kürzeren Betätigungsweg B erfolgt eine schnellere Betätigung der Kontaktsensoreinheit 124. Der in Fig. 4 dargestellte Betätigungsweg B ist beispielsweise kleiner als 10 mm, vorzugsweise kleiner als 5 mm, besonders bevorzugt kleiner als 3 mm.

Im Gegensatz zu der in Fig. 3 gezeigten Behälterführungsvorrichtung 100 weist die in Fig. 4 gezeigte Behälterführungsvorrichtung 100 keine Verriegelungseinheit 129 auf. Auf die Verriegelungseinheit 129 kann insbesondere deswegen verzichtet werden, da der Betätigungsweg B so gering ist, dass eine erforderliche Positioniertoleranz in sämtlichen Positionen des Verstellelements 121 relativ zu dem Verfahrelement 122 eingehalten wird. Mit anderen Worten ist der Betätigungsweg B derart gering, dass das Führungselement 111 in allen Positionen des Verstellelements 121 relativ zum Verfahrelement 122 innerhalb eines akzeptablen Toleranzbereichs angeordnet ist.

So muss im Betrieb lediglich die Kontaktsensoreinheit 124 bzw. die Funktion der Verstelleinrichtung 120 ausgeschaltet sein, um ein unbeabsichtigtes Verfahren beispielsweise beim Kontakt eines Behälters mit dem Geländer 110 zu verhindern.

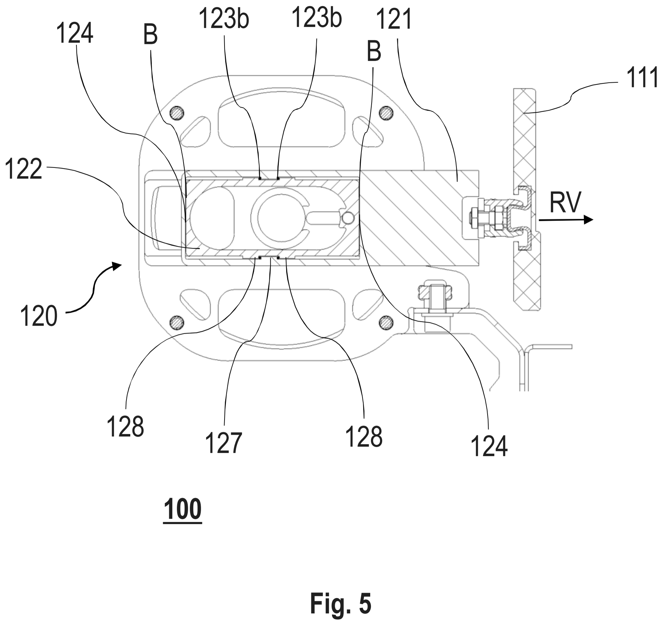

Fig. 5 zeigt eine dritte Ausführungsform der Behälterführungsvorrichtung 100. Die Behälterführungsvorrichtung 100 weist ähnlich wie in Fig. 4 ebenfalls einen sehr geringen Betätigungsweg B auf. Entsprechend weist die Verstelleinrichtung 120 keine Verriegelungseinheit 129 auf.

Der hauptsächliche Unterschied zwischen der in Fig. 4 gezeigten und der in Fig. 5 gezeigten Behälterführungsvorrichtung 100 liegt in dem Mitnehmerelement 123. Während das in Fig. 4 gezeigte Mitnehmerelement 123 als vorgespanntes Druckstück 123a, insbesondere Kugeldruckstück, ausgebildet ist, ist das in Fig. 5 gezeigte Mitnehmerelement 123 als elastisches Element 123b ausgebildet. Das elastische Element 123b ist hierbei insbesondere ein in Verstellrichtung RV komprimierbarer O-Ring, der zwischen dem Verstellelement 121 und dem Verfahrelement 122 angeordnet ist.

Dabei ist das Mitnehmerelement 123 exemplarisch nicht an einer Endseite des Verfahrelements 122, sondern an einer von der Endseite entfernten Position am Verfahrelement 122 angeordnet. Hier ist das Mitnehmerelement 123 exemplarisch an einem zentralen Bereich des Verfahrelements 122 angeordnet. Um eine Anordnung des elastischen Elements 123b zwischen dem Verstellelement 121 und dem Verfahrelement 122 zu ermöglichen, weist das Verstellelement 121 und das Verfahrelement 122 eine entsprechende Schulter 127 bzw.128 auf.

In der in Fig. 5 gezeigten Ausführungsform weist das Verfahrelement 122 zwei Schultern 128 und das Verstellelement 121 eine axial zwischen den beiden Schultern 128 angeordnete Schulter 128 auf. Auch sind zwei elastische Elemente 123b jeweils zwischen den Schultern 127 und 128 angeordnet.

So lässt sich wie auch bei den anderen Ausführungsformen beidseitig der Kontaktsensor 124 betätigen. Selbstverständlich wäre es auch denkbar, dass anstelle der beiden Schultern 128 eine entsprechende Ausnehmung in dem Verfahrelement 122 ausgebildet ist. Auch wäre selbstverständlich eine Umkehr derart denkbar, dass am Verstellelement 122 zwei Schultern 127 und an dem Verfahrelement 128 lediglich eine Schulter 128 ausgebildet ist.

Die Funktionsweise der in Fig. 5 gezeigten Ausführungsform unterscheidet sich von der Funktionsweise der in Fig. 3 und 4 gezeigten Ausführungsform. Kommt ein Hindernis mit dem Führungselement 111 in Kontakt, kann sich das Verfahrelement 122 unter Verformung des elastischen Elements 123b weiter bewegen, ohne die vollständige Bewegungskraft auf das Verstellelement 121 zu übertragen. Mit anderen Worten drückt sich das elastische Element 123b bzw. der O-Ring zwischen dem Verfahrelement 122 und dem Verstellelement 121 zusammen und die Kontaktflächen 125 und 126 berühren sich. Dann kommt auch hier wieder am Ende des Betätigungswegs B das Verfahrelement 122 mit dem Verstellelement 121 in Kontakt und kann so die Kontaktsensoreinheit 124 betätigen.

Bei der Kontaktsensoreinheit 124 wäre es auch denkbar, dass das Verstellelement 121 und/oder das Verfahrelement 122 bestromt sind. Sobald sich die bestromten Bauteile berühren, kann ein entsprechendes Signal an die Steuereinrichtung 130 gesendet werden. Alternativ hierzu handelt es sich bei der Kontaktsensoreinheit 124 um einen induktiven, resistiven, kapazitiven oder piezoelektrischen Berührungssensor.

Es ist festzuhalten, dass die unter Bezug auf einzelne Ausführungsformen bzw. -varianten beschriebenen Merkmale der Erfindung, wie beispielsweise Art und Ausgestaltung der einzelnen Komponenten sowie deren genaue Dimensionierung und räumliche Anordnung auch bei anderen Ausführungsformen vorhanden sein können, außer wenn es anders angegeben ist oder sich aus technischen Gründen von selbst verbietet. Von derartigen, in Kombination beschriebenen Merkmalen einzelner Ausführungsformen müssen außerdem nicht notwendigerweise alle Merkmale in einer betreffenden Ausführungsform realisiert sein.

### Bezugszeichen

- 100: Behälterführungsvorrichtung
- 110: Geländer
- 111: Führungselement
- 112: Befestigungselement
- 120: Verstelleinrichtung
- 121: Verstellelement
- 122: Verfahrelement
- 123: Mitnehmerelement
- 123a: Druckstück
- 123b: elastisches Element
- 124: Kontaktsensoreinheit
- 125: Kontaktfläche (des Verstellelements)
- 126: Kontaktfläche (des Verfahrelements)
- 127: Schulter (des Verstellelements)
- 128: Schulter (des Verfahrelements)
- 129: Verriegelungseinheit
- 130: Steuereinrichtung
- 140: Antriebseinrichtung
- 141: Antriebswelle
- 150: Gehäuse
- 200: Behältertransportvorrichtung
- B: Betätigungsweg
- RT: Transportrichtung
- RV: Verstellrichtung

## Patentansprüche

1. Behälterführungsvorrichtung (100) mit einem Geländer (110) mit mindestens einem sich in Transportrichtung (RT) einer Behältertransportvorrichtung (200) erstreckenden Führungselement (111), wobei das Führungselement (111) mittels einer Verstelleinrichtung (120) entlang einer Verstellrichtung (RV) quer zur Transportrichtung (RT) verstellbar ist,
wobei die Verstelleinrichtung (120) Folgendes aufweist:
ein mit dem Führungselement (111) verbundenes oder verbindbares Verstellelement (121),
ein angetriebenes, insbesondere linear entlang der Verstellrichtung (RV) verfahrbares Verfahrelement (122),
mindestens ein Mitnehmerelement (123), das dazu ausgebildet ist, das Verstellelement (121) mit dem Verfahrelement (122) zum Übertragen einer Bewegung entlang der Verstellrichtung (RV) zu koppeln,
**dadurch gekennzeichnet, dass**
das Mitnehmerelement (123) beim Überschreiten einer maximalen Gegenkraft, die entgegen einer Bewegung des Verstellelements (121) in Verstellrichtung (RV) wirkt, dazu ausgebildet ist, eine Bewegung des Verfahrelements (122) von einer Bewegung des Verstellelements (121) in Verstellrichtung (RV) zu entkoppeln.

2. Behälterführungsvorrichtung (100) nach Anspruch 1, **dadurch gekennzeichnet, dass** das Verfahrelement (122) im entkoppelten Zustand entlang eines durch Kontakt mit dem Verstellelement (121) begrenzten Betätigungsweg (B) bewegbar ist, wobei der Kontakt beim Berühren von mindestens einer Kontaktfläche (126) des Verfahrelements (122) mit mindestens einer Kontaktfläche (125) des Verstellelements (121) erfolgt.

3. Behälterführungsvorrichtung (100) nach Anspruch 2, **dadurch gekennzeichnet, dass** der Betätigungsweg (B) kleiner als 10 mm, insbesondere kleiner als 5 mm, insbesondere kleiner als 3 mm ist.

4. Behälterführungsvorrichtung (100) nach einem der vorherigen Ansprüche, **dadurch gekennzeichnet, dass** die Verstelleinrichtung (120) eine Kontaktsensoreinheit (124) aufweist, die dazu ausgebildet ist, Kontakt zwischen dem Verstellelement (121) und dem Verfahrelement (122) zu erfassen.

5. Behälterführungsvorrichtung (100) nach Anspruch 4, **dadurch gekennzeichnet, dass** die Kontaktsensoreinheit (124) an zumindest einer, vorzugsweise beiden, Endseiten des Verfahrelements (122) in Verstellrichtung (RV) gesehen angeordnet ist.

6. Behälterführungsvorrichtung (100) nach einem der Ansprüche 4 und 5, **dadurch gekennzeichnet, dass** die Behälterführungsvorrichtung (100) mit einer Steuereinrichtung (130) verbunden oder verbindbar ausgebildet ist, wobei die Steuereinrichtung (130) dazu ausgebildet ist, eine das Verfahrelement (122) antreibende Antriebseinrichtung (140) zu stoppen und/oder deren Ansteuerrichtung umzukehren, wenn mittels der Kontaktsensoreinheit (124) ein Kontakt erfasst wird.

7. Behälterführungsvorrichtung (100) nach einem der vorherigen Ansprüche, **dadurch gekennzeichnet, dass** das Verfahrelement (122) in dem Verstellelement (121) angeordnet ist.

8. Behälterführungsvorrichtung (100) nach einem der vorherigen Ansprüche, **dadurch gekennzeichnet, dass** eine Vielzahl an Mitnehmerelementen (123) am Verfahrelement (122) oder am Verstellelement (121) ausgebildet sind.

9. Behälterführungsvorrichtung (100) nach einem der vorherigen Ansprüche, **dadurch gekennzeichnet, dass** das mindestens eine Mitnehmerelement (123) als, insbesondere in eine Richtung senkrecht zur Verstellrichtung (RV), vorgespanntes Druckstück (123a), insbesondere Kugeldruckstück, ausgebildet ist.

10. Behälterführungsvorrichtung (100) nach Anspruch 9, **dadurch gekennzeichnet, dass** das vorgespannte Druckstück (123a) dazu ausgebildet ist, im gekoppelten Zustand des Verfahrelements (122) einen Rasteingriff zwischen Verfahrelement (122) und Verstellelement (121) zu bewirken, wobei der Rasteingriff im entkoppelten Zustand gelöst ist.

11. Behälterführungsvorrichtung (100) nach einem der Ansprüche 1 bis 8, **dadurch gekennzeichnet, dass** das mindestens eine Mitnehmerelement (123) als, insbesondere in Verstellrichtung (RV) komprimierbares, elastisches Element (123b), insbesondere O-Ring, ausgebildet ist.

12. Behälterführungsvorrichtung (100) nach Anspruch 11, **dadurch gekennzeichnet, dass** das elastische Element (123b) axial zwischen einer Schulter (127) des Verstellelements (121) und einer Schulter (128) des Verfahrelements (122) angeordnet ist.

13. Behälterführungsvorrichtung (100) nach einem der vorherigen Ansprüche, **dadurch gekennzeichnet, dass** die Verstelleinrichtung (120) eine verstellbare Verriegelungseinheit (129) aufweist, die dazu ausgebildet ist, eine Bewegung des Verstellelements (121) in Verstellrichtung (RV) relativ zu dem Verfahrelement (121) zu sperren und freizugeben.

14. Behälterbehandlungsmaschine zum Behandeln von Behältern mit mindestens einer der Behälterführungsvorrichtungen (100) nach einem der vorherigen Ansprüche, wobei die Verstelleinrichtung (120) der mindestens einen Behälterführungsvorrichtung (100), insbesondere beim Formatwechsel auf andere Behältergrößen oder andere Gebindegrößen, dazu ausgebildet ist, eine Verstellung der Führungselemente (111) respektive der Geländer (110) durchzuführen.
